# FASCICULE DE BREVET EUROPEEN

(11) **EP 1 750 999 B1**
(45) Date de publication et mention de la délivrance du brevet: **11.07.2012**
(21) Numéro de dépôt: 05769703.9
(22) Date de dépôt: 27.05.2005
(51) Int. Cl.: B64C 27/20, B64C 27/10

(54) **DRONE MINIATURISE A ATTERISSAGE ET DECOLLAGE VERTICAL**
MINIATUR-DROHNE FÜR VERTIKALES ABHEBEN UND LANDEN
VERTICAL TAKE-OFF AND LANDING MINIATURE DRONE

(30) Priorité: 04.06.2004 FR 0406082
(43) Date de publication de la demande: 14.02.2007
(73) Titulaire: Bertin Technologies, 78180 Montigny-le-Bretonneux (FR)
(72) Inventeur: LAVAL-JEANTET, Rémi, F-95350 Saint Brice Sous Foret (FR); TROUCHET, Daniel, F-75015 Paris (FR); BROSSAY, Nicolas, F-28410 Bu (FR); BINETTI, Paolo, F-75015 Paris (FR)
(74) Mandataire: Ramey, Daniel
(86) Numéro de dépôt international: PCT/FR2005/001317
(87) Numéro de publication internationale: WO 2006/016018

(56) Documents cités:
- EP-A- 0 661 206
- US-B1- 6 450 445
- US-B1- 6 502 787
- PATENT ABSTRACTS OF JAPAN vol. 2000, no. 17, 5 juin 2001 (2001-06-05) & JP 01 114594 A (AISIN AW CO LTD), 8 mai 1989 (1989-05-08)

## Description

L'invention concerne un drone miniaturisé à atterrissage et décollage vertical, du type comprenant un carénage annulaire, une hélice montée à rotation dans le carénage autour de l'axe de celui-ci, un moteur d'entraînement de l'hélice, monté dans un corps cylindrique qui s'étend axialement dans le carénage, et des gouvernes montées pivotantes sous l'hélice entre le corps cylindrique et le carénage.

Le document JP-A-01 114594 décrit un engin volant commandé manuellement ou par ondes radio avec toutes les caractéristiques du préambule de la revendication 1.

On connaît, par exemple par le document EP-A-0 661 206, un drone de ce type dans lequel une pluralité d'aubes fixes de redressement sont agencées dans le carénage annulaire sous l'hélice et s'étendent dans deux directions perpendiculaires sur une certaine hauteur et jusqu'à l'extrémité inférieure du carénage. Des gouvernes formées par des aubes pivotantes sont portées par cette extrémité du carénage annulaire et s'étendent sous celui-ci dans deux directions perpendiculaires en direction du corps. Trois pieds d'atterrissage verticaux du type pneumatique ou à amortissement fluidique s'étendent vers le bas depuis l'extrémité inférieure du carénage.

La présente invention a notamment pour but d'améliorer largement les performances en vol de ce type de drone, sa précision de pilotage et sa stabilité.

Elle propose à cet effet un drone miniaturisé à atterrissage et décollage vertical, comprenant un carénage annulaire sensiblement cylindrique, une hélice montée à rotation dans le carénage autour de l'axe de celui-ci, un moteur d'entraînement de l'hélice monté dans un corps cylindrique s'étendant axialement dans le carénage, et des gouvernes montées entre le corps cylindrique et le carénage sous ladite hélice, une seconde hélice étant montée à rotation autour de l'axe du carénage au voisinage de la première hélice citée et étant entraînée en rotation par le moteur précité au moyen d'un inverseur de rotation de sorte que les deux hélices sont entraînées à la même vitesse et dans ces sens contraires, caractérisé en ce que la seconde hélice est montée dans le carénage et en ce que les gouvernes comprennent des boîtes ouvertes à leurs extrémités supérieure et inférieure et contenant des ailettes profilées, ces boîtes étant montées pivotantes autour d'axes radiaux entre le carénage annulaire et la partie inférieure du corps cylindrique et se trouvant, sous les hélices, en partie à l'intérieur du carénage annulaire.

Le montage de deux hélices contrarotatives qui tournent à la même vitesse dans le carénage annulaire du drone selon l'invention permet d'annuler en quasi-totalité le couple gyroscopique induit. De plus, il n'est plus nécessaire de prévoir des redresseurs d'écoulement dont la mise au point n'est pas facile et qui ne peuvent être optimisés pour toutes les phases de vol. Ce montage améliore aussi le rendement aéraulique par récupération partielle de l'énergie cinétique rotationnelle et redressement du flux aval. Le pilotage du drone au moyen des gouvernes est également facilité et plus précis.

L'utilisation d'ailettes profilées permet de régulariser l'écoulement d'air dans les boîtes formant les gouvernes et d'augmenter la portance ainsi que l'efficacité des gouvernes. En outre, comme le bord d'attaque des ailettes est à l'intérieur du carénage, les gouvernes conservent leur efficacité en cas de vent.

Dans un mode de réalisation préféré du drone selon l'invention, les boîtes à ailettes sont au nombre de quatre et sont réparties à 90 degrés autour de la partie inférieure du corps cylindrique, les axes de pivotement des boîtes à ailettes étant sensiblement au niveau des centres de poussée des ailettes.

Ceci permet de réduire de manière significative les moments résultants des forces de poussée et donc de faciliter le pilotage du drone.

Le drone comprend également des ailettes extérieures fixes, s'étendant vers le bas depuis l'extrémité inférieure du carénage annulaire et reliées entre elles à leurs extrémités inférieures par un cerceau d'atterrissage. Ces ailettes extérieures fixes sont avantageusement en forme d'ailes delta et s'étendent dans des plans radiaux autour du carénage annulaire. Elles sont radialement alignées avec les axes de pivotement des boîtes à ailettes et comprennent des cavités de logement des moteurs d'entraînement des axes de pivotement des boîtes à ailettes.

Ces ailettes extérieures fixes permettent de stabiliser la trajectoire du drone en cas de forte incidence, par exemple en dérapage, en virage, etc. Elles forment également les pieds du drone qui sont reliés entre eux par un cerceau d'atterrissage qui stabilise le drone lors du décollage et des l'atterrissage.

Des entretoises montées radialement entre le corps cylindrique et le carénage annulaire, en-dessous des hélices et au-dessus des boîtes à ailettes, forment également des aubes fixes de redressement d'écoulement d'air. La partie supérieure du corps cylindrique est de plus reliée à l'extrémité supérieure du carénage annulaire par des entretoises obliques extérieures au carénage.

La partie inférieure du corps cylindrique contient des modules de navigation, de guidage et de pilotage, comportant notamment une centrale inertielle, des accéléromètres, des gyromètres, etc.

La partie supérieure du corps cylindrique contient le moteur d'entraînement des hélices et son extrémité supérieure est formée par une ogive contentant des instruments d'observation et/ou de détection. L'ogive est avantageusement de forme profilée et son axe de symétrie définit une direction privilégiée de vol.

L'ogive de forme aérodynamique a un faible coefficient de traînée, ce qui permet de réduire les oscillations en vol et d'améliorer la stabilisation en trajectoire.

La partie supérieure du corps cylindrique comporte avantageusement des prises d'air, de préférence du type NACA, formées au-dessus des hélices et permettant de créer un écoulement d'air de refroidissement, aspiré par les hélices, à l'intérieur de la partie supérieure et de la partie inférieure du corps cylindrique, cet air de refroidissement étant éjecté par des ouvertures de sortie de l'extrémité inférieure du corps cylindrique.

Cet écoulement d'air permet de refroidir des composants contenus dans le corps cylindrique, tels que le moteur d'entraînement des hélices et les modules de pilotage, de guidage et de navigation.

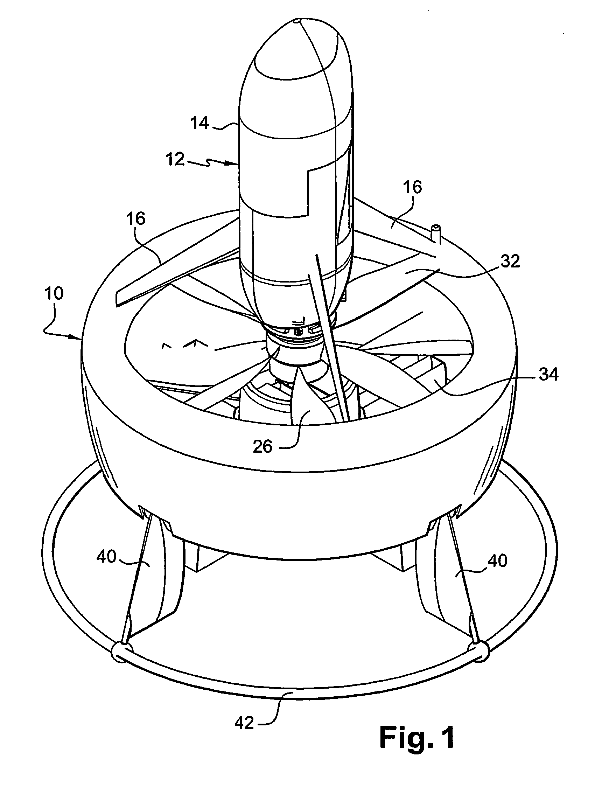

D'autres avantages et caractéristiques de l'invention apparaîtront à la lecture de la description suivante faite à titre d'exemple non limitatif et en référence aux dessins annexés dans lesquels :
- tua figure 1 est une vue schématique en perspective d'un drone miniaturisé à atterrissage et décollage vertical selon l'invention ;

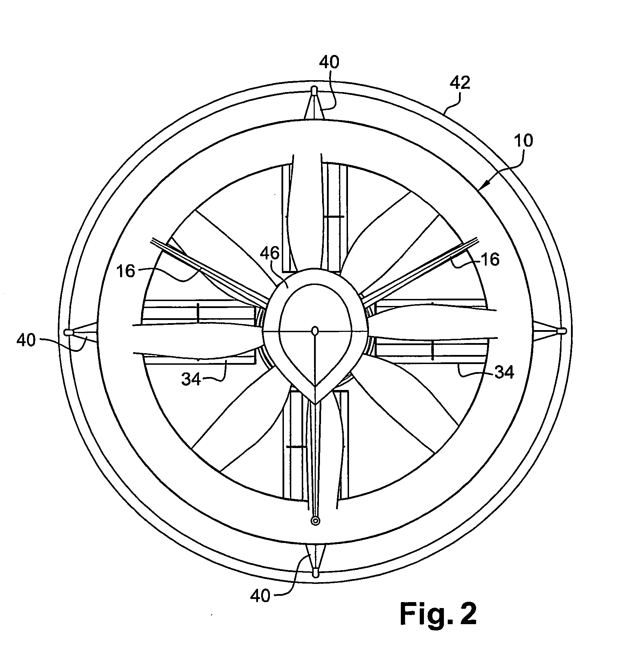

- la figure 2 est une vue schématique de dessus du drone de la figure 1 ;
- la figure 3 est une vue schématique en coupe axiale de ce drone ;

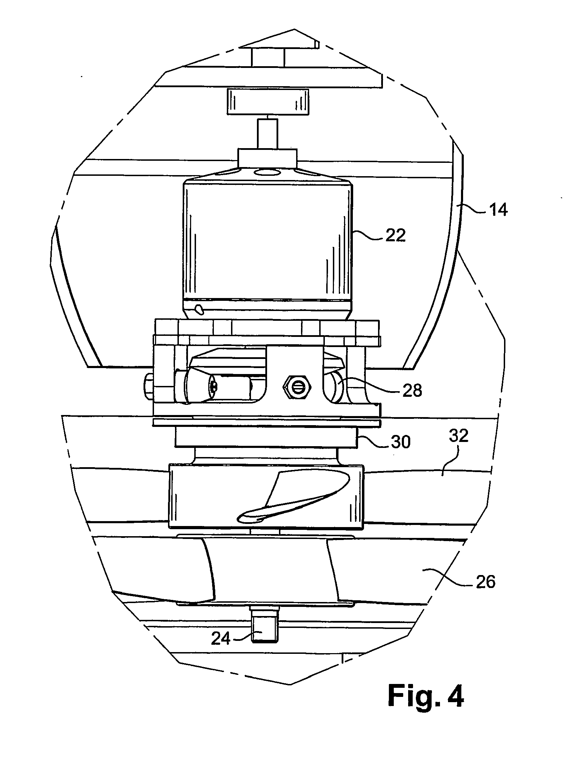

- la figure 4 est une vue partielle agrandie de la figure 3 et représente les hélices du drone et leurs moyens d'entraînement ;

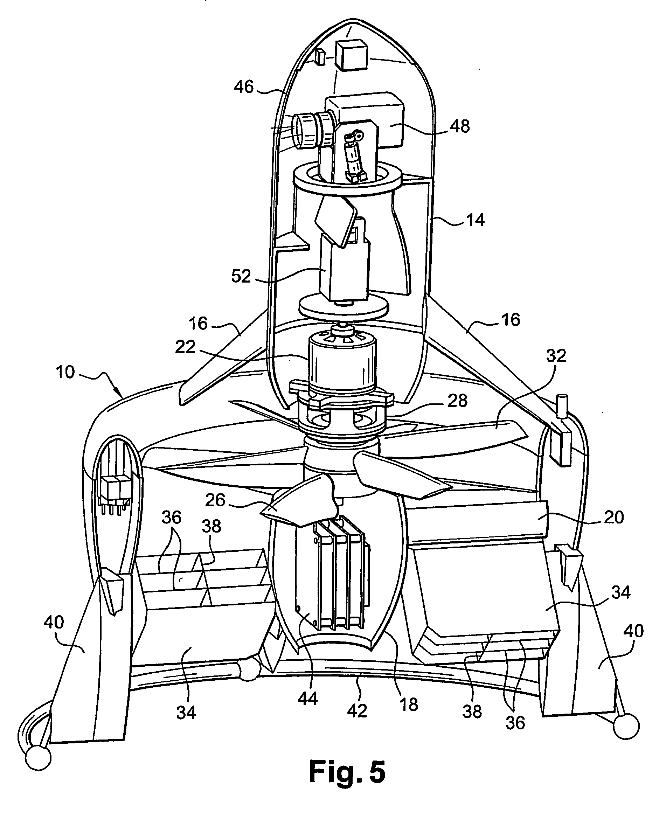

- la figure 5 est une vue schématique en perspective et arrachement partiel du drone selon l'invention.

Le drone selon l'invention est un drone miniaturisé qui, dans l'exemple de réalisation représenté aux dessins, peut avoir des, dimensions de l'ordre de 50 cm en diamètre extérieur et de 70 cm en hauteur, pour un poids de l'ordre de 3 kg, ce drone ayant une autonomie de vol comprise entre 10 et 30 minutes. De façon plus générale, les dimensions du drone peuvent être comprises entre 0,1 et 1 mètre en diamètre extérieur, selon les applications auxquelles il est destiné et qui comprennent typiquement des missions de reconnaissance, d'observation, de détection, d'inspection, par exemple d'ouvrages d'art, etc....

Ce drone comprend essentiellement un carénage cylindrique 10 formant une aile annulaire de forme axisymétrique et un corps cylindrique 12 s'étendant à l'intérieur du carénage annulaire 10 le long de l'axe de celui-ci et comportant un corps supérieur 14 situé au-dessus du carénage annulaire 10 et relié à la partie supérieure de ce dernier par des entretoises obliques 16, au nombre de trois dans l'exemple représenté, et un corps inférieur 18 qui s'étend à l'intérieur de la partie inférieure du carénage annulaire 10 et se termine à son extrémité inférieure sous le bord inférieur du carénage 10, ce corps inférieur 18 du corps cylindrique 12 étant relié au carénage annulaire 10 par des entretoises 20 formant des aubes fixes de redressement d'écoulement d'air.

Un moteur électrique 22 est logé en partie inférieure du corps supérieur 14 et comporte un arbre de sortie 24 s'étendant axialement vers le bas, qui porte une hélice 26 tournant à l'intérieur du carénage annulaire 10. Cet arbre de sortie 24 est relié par un inverseur de rotation 28 à roues dentées et à satellites à un autre arbre de sortie 30 qui s'étend coaxialement au premier arbre de sortie 24 autour de celui-ci et qui porte une autre hélice 32 montée au-dessus de la première hélice 26 et tournant en sens contraire de celle-ci, à la même vitesse de rotation, à l'intérieur du carénage annulaire 10.

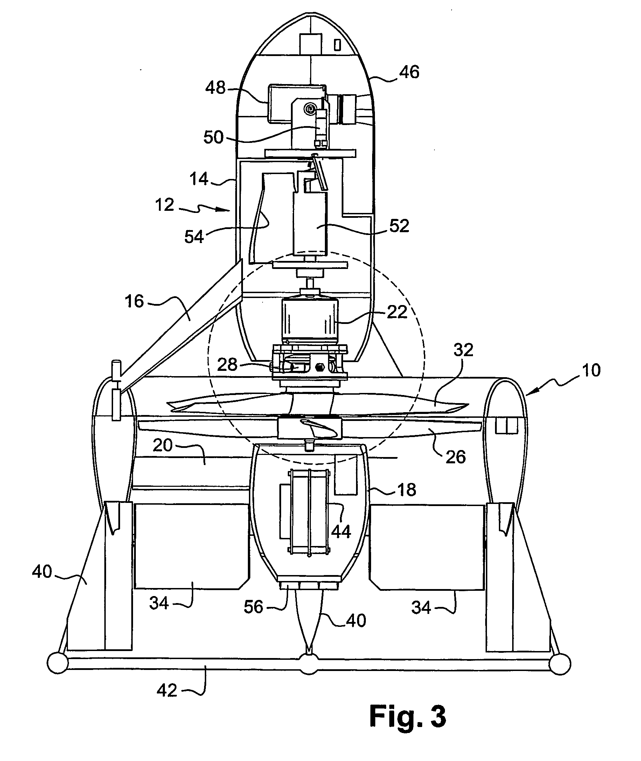

Les deux hélices 26 et 32 ainsi que l'inverseur de rotation 28 se trouvent entre le corps supérieur 14 et le corps inférieur 18, comme on le voit bien en figure 3.

Les entretoises 20 précitées s'étendent dans des plans passant par l'axe de rotation des hélices, sous l'hélice inférieure 26, et ont une hauteur relativement faible comme représenté en figure 3. Elles relient rigidement la partie médiane du carénage annulaire 10 à la partie supérieure du corps inférieur 18.

Des gouvernes 34 sont montées entre la partie inférieure du carénage annulaire 10 et le corps inférieur 18 et sont constituées par des boîtes 34 de forme sensiblement parallélépipédique rectangle, ouvertes à leurs extrémités supérieure et inférieure et contenant des ailettes profilées 36 parallèles aux parois des boîtes 34 et qui définissent à l'intérieur de ces boîtes des rangées de conduits d'écoulement d'air à section rectangulaire.

Les boîtes 34 sont au nombre de quatre dans l'exemple représenté et s'étendent à 90° les unes des autres autour de l'axe de rotation des hélices. Chaque boîte 34 est montée pivotante autour d'un axe radial sur le corps inférieur 18, cet axe radial de pivotement étant situé au voisinage du centre de poussée des ailettes profilées 36 de façon à ce que les moments résultant des flux d'air dans les boîtes 34 soient faibles et facilement contrôlables.

Des entretoises intermédiaires profilées 38 parallèles à l'axe de rotation sont montées dans les boîtes 34 entré les ailettes profilées 36 pour régulariser l'écoulement d'air dans ces boîtes.

Les boîtes 34 s'étendent, dans une direction parallèle à l'axe de rotation des hélices, sensiblement entre le milieu du corps inférieur 18 et l'extrémité inférieure de celui-ci.

Des ailettes extérieures 40 en forme d'aile delta sont portées par la partie inférieure du carénage annulaire 10 et forment les pieds du drone. Ces ailettes 40, qui sont au nombre de quatre dans l'exemple représenté, sont contenues dans des plans radiaux par rapport à l'axe de rotation des hélices et sont alignées avec les axes de pivotement des gouvernes 34. Les moteurs d'entraînement des gouvernes 34 peuvent être montés à l'extrémité radialement externe des axes de pivotement des gouvernes et sont logés dans des cavités ou des découpes des bords intérieurs des ailettes 40.

Celles-ci sont reliées entre elles à leur extrémité inférieure par un cerceau d'atterrissage 42 qui s'étend dans un plan perpendiculaire à l'axe de rotation des hélices et qui permet d'assurer un atterrissage stabilisé du drone, même dans le cas d'une attitude d'approche inclinée par rapport à la verticale ou avec une vitesse horizontale résiduelle.

Ces ailettes extérieures fixes 40 s'étendent parallèlement à l'axe de rotation sous l'extrémité inférieure du corps inférieur 18 et des gouvernes 34.

Le corps inférieur 18 contient des modules 44 de pilotage, de navigation et de guidage comprenant notamment des calculateurs, une centrale inertielle à trois axes comportant trois accéléromètres et trois gyromètres, et un baroaltimètre, le drone étant de plus équipé d'un système de localisation du type GPS et pouvant aussi comprendre un inclinomètre bi-axial, trois magnétomètres et un gyromètre à fibres optiques, un récepteur de télécommande, un bus de données, des générateurs de signaux, etc.

La partie supérieure du corps supérieur 14 est formée par une ogive 46 à profil aérodynamique dont l'axe de symétrie définit une direction privilégiée de vol du drone et qui contient des instruments d'observation et/ou de détection, tels par exemple qu'une caméra 48 d'un type approprié, montée au moyen d'une monture mobile en site sur une platine azimutale pouvant tourner de 360°, des moyens de stabilisation gyroscopique 50 étant avantageusement prévus sur la monture.

Le corps supérieur 14 contient également, au-dessus du moteur 22, un module 52 d'évitement d'obstacles, du type radar ou à rayonnement infrarouge chargé de la détection des objets avec lesquels le drone pourrait entrer en collision et monté sur une platine mobile en site et en azimut. Le montage des moyens de détection et d'évitement d'obstacles dans le corps supérieur assure un large champ de vision en dépit des variations d'attitude du drone. Le moteur 22 logé en partie inférieure du corps supérieur 14 est par exemple un moteur électrique asynchrone équipé d'un variateur électronique et alimenté par des batteries logées à l'intérieur du carénage annulaire 10.

Des prises d'air 54, par exemple du type NACA, sont formées dans le corps supérieur 14, au-dessus du moteur électrique 22 et permettent par aspiration par les hélices 26, 32 la formation d'un écoulement d'air qui passe par l'extrémité inférieure ouverte du corps supérieur 14 et par l'extrémité supérieure ouverte du corps inférieur 18 pour refroidir le module 52, le moteur électrique 22, l'inverseur de rotation 28 ainsi que les modules 44 logés à l'intérieur du corps inférieur 18, l'écoulement d'air de refroidissement pouvant sortir du corps inférieur 18 par des ouvertures 56 formées à l'extrémité inférieure de celui-ci:

Le drone selon l'invention est capable de décollage et d'atterrissage vertical, de vol stationnaire et de déplacement en vol à vitesse relativement élevée. L'utilisation d'hélices contrarotatives tournant à l'intérieur du carénage annulaire 10 permet d'annuler en quasi-totalité le couple gyroscopique induit ainsi que d'améliorer le rendement aéraulique par récupération partielle de l'énergie cinétique rotationnelle et par redressement du flux aval, les hélices étant à pas fixe ou variable.

Les gouvernes formées par les boîtes 34 à ailettes profilées sont très efficaces et ne génèrent qu'un faible couple de réaction.

Les ailettes extérieures fixes 40 permettent un rappel vers le bas en cas de fort dérapage du drone ou de virage prononcé et contribuent à stabiliser la trajectoire en vol.

La forme aérodynamique profilée de l'ogive 46 permet de réduire la traînée en vol quand le drone est déplacé dans une direction correspondant à l'axe de symétrie de l'ogive, ce profilage de l'ogive permettant également de réduire les oscillations en vol et de stabiliser la trajectoire du drone.

## Revendications

1. Drone miniaturisé à atterrissage et décollage vertical, comprenant un carénage annulaire (10) sensiblement cylindrique, une hélice (26) montée à rotation dans le carénage autour de l'axe de celui-ci, un moteur (22) d'entraînement de l'hélice, monté dans un corps cylindrique (12) s'étendant axialement dans le carénage, et des gouvernes situées entre le corps cylindrique et le carénage sous ladite hélice, une seconde hélice (32) étant montée à rotation dans le carénage autour de l'axe du carénage au voisinage de la première hélice citée (26) et étant entraînée en rotation par le moteur (22) au moyen d'un inverseur de rotation (28) de sorte que les deux hélices sont entraînées à la même vitesse et dans des sens contraires, **caractérisé en ce que** les que les gouvernes comprennent des boîtes (34) ouvertes à leurs extrémités supérieure et inférieure et contenant des ailettes profilées (36), ces boîtes étant montées pivotantes autour d'axes radiaux entre le carénage annulaire (10) et la partie inférieure (18) du corps cylindrique et se trouvant, sous les hélices, en partie à l'intérieur du carénage annulaire.

2. Drone selon la revendication 1, **caractérisé en ce que** des entretoises (20) formant des aubes fixes (20) de redressement d'écoulement sont montées radialement entre le corps cylindrique et le carénage annulaire, en-dessous des hélices et au-dessus des boîtes à ailettes,

3. Drone selon la revendication 1 ou 2, **caractérisé en ce que** les boîtes à ailettes (34) sont au nombre de quatre et sont réparties à 90 degrés autour de la partie inférieure du corps cylindrique.

4. Drone selon les revendications 1 à 3, **caractérisé en ce que** les axes de pivotement des boîtes à ailettes (34) sont sensiblement au niveau des centres de poussée des ailettes.

5. Drone selon l'une des revendications 1 à 4, **caractérisé en ce qu'**il comprend des ailettes extérieures fixes (40), s'étendant vers le bas depuis l'extrémité inférieure du carénage annulaire et reliées entre elles à leurs extrémités inférieures par un cerceau d'atterrissage (42).

6. Drone selon la revendication 5, **caractérisé en ce que** les ailettes extérieures fixes (40) sont en forme d'ailes delta et s'étendent dans des plans radiaux autour du carénage annulaire (10).

7. Drone selon la revendication 5 ou 6, **caractérisé en ce que** les ailettes extérieures fixes (40) sont radialement alignées avec les axes de pivotement des boîtes à ailettes (34).

8. Drone selon la revendication 7, **caractérisé en ce que** les axes de pivotement des boîtes à ailettes (34) sont entraînés en rotation par des moteurs logés dans des cavités des ailettes fixes (40) précitées.

9. Drone selon l'une des revendications 1 à 8, **caractérisé en ce que** la partie supérieure (14) du corps cylindrique est reliée à l'extrémité supérieure du carénage annulaire par des entretoises obliques (16) extérieures au carénage (10).

10. Drone selon l'une des revendications 1 à 9, **caractérisé en ce que** la partie supérieure (14) du corps cylindrique contient le moteur (22) d'entraînement des hélices et son extrémité supérieure est formée par une ogive (46) contenant des instruments d'observation et/ou de détection.

11. Drone selon la revendication 10, **caractérisé en ce que** l'ogive (46) est de forme profilée et son axe de symétrie définit une direction privilégiée de vol.

12. Drone selon l'une des revendications 1 à 11, **caractérisé en ce que** la partie supérieure (14) du corps cylindrique comporte des prises d'air (54) situées au-dessus des hélices et permettant de créer un écroulement d'air de refroidissement, aspiré par les hélices, à l'intérieur de la partie supérieure (14) et de la partie inférieure (18) du corps cylindrique, cet air de refroidissement étant éjecté par des ouvertures de sortie à l'extrémité inférieure du corps cylindrique.

13. Drone selon l'une des revendications 1 à 12, **caractérisé en ce que** le moteur (22) d entraînement des hélices est un moteur électrique alimenté par des batteries logées dans le carénage annulaire (10).

14. Drone selon l'une des revendications 1 à 13, **caractérisé en ce que** la partie inférieure (18) du corps cylindrique contient des modules (44) de navigation, de guidage et de pilotage.

## Claims

1. A vertical takeoff and landing miniature drone comprising a substantially cylindrical annular fairing (10), a propeller (26) mounted in the fairing to rotate about its axis, a propeller drive motor (22) mounted in a cylindrical body (12) extending axially in the fairing, and control surfaces situated between the cylindrical body and the fairing under said propeller, a second propeller (32) being mounted in the fairing to rotate about the axis of the fairing in the vicinity of the first-mentioned propeller (26) and being driven in rotation by the motor (22) via a rotation reverser (28) such that the two propellers are driven at the same speed and in opposite directions, the drone being **characterized in that** the control surfaces comprise boxes (34) that are open at their top and bottom ends and that contain streamlined fins (36), the boxes being mounted to pivot about radial axes between the annular fairing (10) and the bottom portion (18) of the cylindrical body and being located beneath the propellers in the bottom portion of the annular fairing.

2. A drone according to claim 1, **characterized in that** spacers (20) forming flow guide vanes (20) are mounted radially between the cylindrical body and the annular fairing beneath the propellers and above the fin boxes.

3. A drone according to claim 1 or claim 2, **characterized in that** the fin boxes (34) are four in number and are distributed at 90° intervals around the bottom portion of the cylindrical body.

4. A drone according to claims 1 to 3, **characterized in that** the pivot axes of the fin boxes (34) are substantially level with the thrust centers of the fins.

5. A drone according to any one of claims 1 to 4, **characterized in that** it has stationary external fins (40) extending downwards from the bottom end of the annular fairing and connected to one another at their bottom ends by a landing hoop (42).

6. A drone according to claim 5, **characterized in that** the stationary outer fins (40) are in the form of delta wings and extend in radial planes around the annular fairing (10).

7. A drone according to claim 5 or claim 6, **characterized in that** the stationary outer fins (40) are in radial alignment with the pivot axes of the fin boxes (34).

8. A drone according to claim 7, **characterized in that** the pivot axes of the fin boxes (34) are driven in pivoting by motors housed in cavities in the above-mentioned stationary fins (40).

9. A drone according to any one of claims 1 to 8, **characterized in that** the top portion (14) of the cylindrical body is connected to the top end of the annular fairing by sloping spacers (16) outside the fairing (10).

10. A drone according to any one of claims 1 to 9, **characterized in that** the top portion (14) of the cylindrical body contains the motor (22) for driving the propellers and its top end is formed by a cone (46) containing observation and/or detection instruments.

11. A drone according to claim 10, **characterized in that** the cone (46) is of streamlined shape and its axis of symmetry defines a preferred flight direction.

12. A drone according to any one of claims 1 to 11, **characterized in that** the top portion (14) of the cylindrical body includes air intakes (54) situated above the propellers and enabling a flow of cooling air sucked through by the propellers to be established inside the top portion (14) and the bottom portion (18) of the cylindrical body, the cooling air being ejected via outlet orifices at the bottom end of the cylindrical body.

13. A drone according to any one of claims 1 to 12, **characterized in that** the propeller drive motor (22) is an electric motor powered by batteries housed in the annular fairing (10).

14. A drone according to any one of claims 1 to 13, **characterized in that** the bottom portion (18) of the cylindrical body contains navigation, guidance, and piloting modules (44).

## Patentansprüche

1. Miniaturisierte Drohne zum senkrechten Landen und Starten,
umfassend, eine im wesentlichen zylindrische ringförmige Verkleidung (10), einen Propeller (26), der in der Verkleidung um die Achse davon herum drehgelagert ist, einen Motor (22) zum Antrieb des Propellers, der in einem sich in der Verkleidung axial erstreckenden zylindrischen Körper (12) gelagert ist, und Steuerruder, die zwischen dem zylindrischen Körper und der Verkleidung unter dem Propeller angeordnet sind, wobei ein zweiter Propeller (32) in der Verkleidung um die Achse der Verkleidung herum in der Nachbarschaft des ersten Propellers (26) drehbar gelagert und durch den Motor (22) mittels eines Rotationsumwandlers (28) derart in Rotation gebracht wird, sodass beide Propeller mit derselben Geschwindigkeit und in gegenläufige Richtungen angetrieben werden, **dadurch gekennzeichnet, dass** die Steuerruder Gehäuse (34) umfassen, die an ihren oberen und unteren Enden geöffnet sind, und Profilflügel (36) aufweisen, wobei diese Gehäuse um radiale Achsen herum zwischen der ringförmige Verkleidung (10) und dem Unterteil (18) des zylindrischen Körpers schwenkbar gelagert und unter den Propellern, teilweise innerhalb der ringförmigen Verkleidung angeordnet sind.

2. Drohne nach Anspruch 1, **dadurch gekennzeichnet, dass** zwischen dem zylindrischen Körper und der ringförmigen Verkleidung unterhalb der Propeller und oberhalb der Flügelgehäuse radial Abstandhalter (20) angebracht sind, die fixierte Schaufeln (20) zur Strömungsausrichtung bilden.

3. Drohne nach Anspruch 1 oder 2, **dadurch gekennzeichnet, dass** diese vier Flügelgehäuse (34) aufweist und um 90° um den unteren Bereich des zylindrischen Körpers verteilt angeordnet sind.

4. Drohne nach einem der Ansprüche 1 bis 3, **dadurch gekennzeichnet, dass** die Schwenkachsen der Flügelgehäuse (34) im Wesentlichen in der Ebene der Schubzentren der Flügel liegen.

5. Drohne nach einem der Ansprüche 1 bis 4, **dadurch gekennzeichnet, dass** sie feste äussere Flügel (40) aufweist, die sich vom unteren Ende der ringförmigen Verkleidung abwärts erstrecken und an deren unteren Enden durch einen Landungsreifen (42) miteinander verbunden sind.

6. Drohne nach Anspruch 5, **dadurch gekennzeichnet, dass** die fixierten äusseren Flügel (40) in Form von Deltaflügeln vorliegen und um die ringförmige Verkleidung (10) herum in radialen Ebenen verlaufen.

7. Drohne nach Anspruch 5 oder 6, **dadurch gekennzeichnet, dass** die fixierten äusseren Flügel (40) mit den Schwenkachsen der Flügelgehäuse (34) radial ausgerichtet sind.

8. Drohne nach Anspruch 7, **dadurch gekennzeichnet, dass** die Schwenkachsen der Flügelgehäuse (34) durch in Hohlräumen der festen Flügel (40) gelagerten Motoren in Rotation gebracht werden.

9. Drohne nach einem der Ansprüche 1 bis 8, **dadurch gekennzeichnet, dass** der obere Bereich (14) des zylindrischen Körpers mit dem oberen Ende der ringförmigen Verkleidung durch außerhalb der Verkleidung (10) liegende schräge Abstandhalter (16) verbunden ist.

10. Drohne nach einem der Ansprüche 1 bis 9, **dadurch gekennzeichnet, dass** der obere Bereich (14) des zylindrischen Körpers den Motor (22) zum Antrieb der Propeller enthält und dass sein oberes Ende von einer Ogive (46) gebildet ist, die Beobachtungs- und/oder Erfassungsinstrumente umfasst.

11. Drohne nach Anspruch 10, **dadurch gekennzeichnet, dass** die Ogive (46) ein Profil aufweist und deren Symmetrieachse eine bevorzugte Flugrichtung bestimmt.

12. Drohne nach einem der Ansprüche 1 bis 11, **dadurch gekennzeichnet, dass** der obere Bereich (14) des zylindrischen Körpers Lufteinlässe (54) enthält, die oberhalb der Propeller angeordnet sind und eine Kühlluftströmung schaffen können, die von den Propellern innerhalb des oberen Bereichs (14) und des unteren Bereichs (18) des zylindrischen Körpers angesogen wird, wobei diese Kühlluft aus Auslassöffnungen am unteren Ende des zylindrischen Körpers ausgestossen wird.

13. Drohne nach einem der Ansprüche 1 bis 12, **dadurch gekennzeichnet, dass** der Motor (22) zum Antrieb der Propeller ein Elektromotor ist, der von in der ringförmigen Verkleidung (10) angebrachten Batterien gespeist wird.

14. Drohne nach einem der Ansprüche 1 bis 13, **dadurch gekennzeichnet, dass** der untere Bereich (18) des zylindrischen Körpers Navigations-, Führungs- und Steuerungs-Module (44) enthält.
